# FASCICULE DE BREVET EUROPEEN

(11) **EP 2 000 332 B1**
(45) Date de publication et mention de la délivrance du brevet: **11.01.2012**
(21) Numéro de dépôt: 08290517.5
(22) Date de dépôt: 05.06.2008
(51) Int. Cl.: B60C 23/04

(54) **Atterrisseur équipé d'un dispositif de communication entre une roue et l'atterrisseur**
Fahrwerk, das mit einer Kommunikationsvorrichtung zwischen einem Rad und dem Fahrwerk ausgestattet ist
Landing gear equipped with a device for communication between a wheel and the landing gear

(30) Priorité: 07.06.2007 FR 0704088
(43) Date de publication de la demande: 10.12.2008
(73) Titulaire: SAGEM Défense Sécurité, 75015 Paris (FR)
(72) Inventeur: Pradier, Jean-Clair, 78800 Houilles (FR); Maes, Bertrand, 92170 Vanves (FR)
(74) Mandataire: Parzy, Benjamin Alain

(56) Documents cités:
- EP-A- 1 790 503
- WO-A-02/096681
- FR-A- 2 809 674

## Description

L'invention concerne un dispositif de communication entre un capteur monté sur une roue d'aéronef et des moyens de traitement fixes montés sur l'aéronef.

### ARRIERE-PLAN DE L'INVENTION

En aéronautique, il est courant de surveiller la pression des pneumatiques en permanence à l'aide d'un capteur de pression disposé sur la jante de la roue. Le capteur est relié à une première antenne tournant avec la roue, cette antenne s'étendant en regard d'une antenne fixe portée à l'extrémité de l'essieu de la roue et qui est reliée à des moyens de traitement des indications du capteur par des liaisons électriques s'étendant dans l'essieu. Ainsi, lorsque du démontage de la roue, il n'est pas nécessaire de déconnecter le capteur des moyens de traitement. Cependant, le dispositif de communication ainsi disposé est relativement exposé, et peut être endommagé, par exemple en cas de choc avec un obstacle externe.

Le document EP 1 790 503 divulgue un tel dispositif en accord avec les termes du préambule de la revendication 1.

### OBJET DE L'INVENTION

L'invention a pour objet un agencement particulier du dispositif de communication, permettant de mieux protéger celui-ci

### BREVE DESCRIPTION DE L'INVENTION

Selon l'invention, on propose un atterrisseur d'aéronef comportant au moins un essieu sur lequel au moins une roue est montée pour tourner, l'atterrisseur comportant un dispositif de communication pour relier un capteur monté sur une jante de la roue à des moyens de traitement fixes montés sur l'aéronef, le dispositif de communication comportant d'une part une antenne tournante montée sur la jante de la roue pour tourner avec celle-ci et reliée au capteur, et d'autre part une antenne fixe qui est montée en regard de l'antenne tournante pour être en relation électromagnétique avec l'antenne tournante et qui est reliée aux moyens de traitement, dans lequel l'antenne fixe et l'antenne tournante s'étendent du côté intérieur à la roue en regard de l'atterrisseur.

Ainsi, le dispositif de communication est entièrement caché depuis l'extérieur, ce qui le protège des éventuels chocs. En outre, l'antenne fixe n'est plus reliée aux moyens de traitement par des liaisons électriques longues courant dans l'essieu, mais peut être reliée par des liaisons électriques courtes passant à l'extérieur de l'essieu, ce qui simplifie la connexion de l'antenne fixe.

En outre, ainsi disposé il permet de libérer l'extrémité de l'essieu qui peut alors recevoir un organe de remorquage de l'aéronef.

### BREVE DESCRIPTION DES DESSINS

L'invention sera mieux comprise à la lumière de la description qui suit en référence aux figures des dessins annexés, parmi lesquelles :

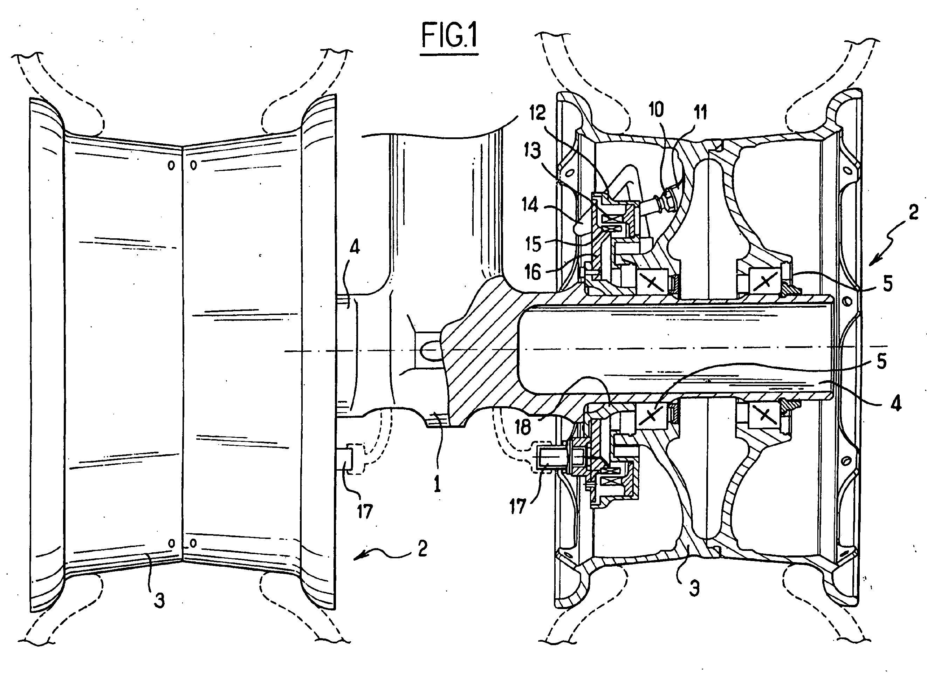

- la figure 1 est une vue en coupe partielle de l'extrémité basse d'un atterrisseur auxiliaire d'aéronef pourvu d'un système de communication selon l'invention, seule la roue droite étant coupée ;
- la figure 2 est une vue en perspective partielle de l'atterrisseur illustré à la figure 1, la roue droite ayant été omise.

### DESCRIPTION DETAILLEE DE L'INVENTION

Sur les figures est illustrée la partie basse d'une tige d'atterrisseur auxiliaire 1 d'aéronef portant deux roues 2 non freinées. Les roues 2 comportent des jantes 3 constituées de façon connue en soi de deux demi-jantes accolées, et des pneumatiques esquissés en pointillés.

Les jantes 3 sont reçues sur des essieux 4 s'étendant de part et d'autre de l'atterrisseur 1, et y sont montées à rotation par l'intermédiaire de roulements 5. Pour chaque roue 2, il est possible de définir un côté intérieur en regard de l'atterrisseur 1, et un côté extérieur visible. On remarquera que les roues 2 portées par l'atterrisseur 1 auxiliaire sont dépourvues de freins.

Chacune des jantes 3 est ici équipée d'un capteur de pression 10 qui est implanté dans un orifice taraudé ménagé dans un bossage 11, l'orifice étant en communication avec l'intérieur du pneumatique. Le capteur est ainsi à même de mesurer la pression régnant dans le pneumatique.

Sur chacune des jantes 3 est fixé un premier support 12 qui porte une antenne tournante 13 qui tourne avec la roue 2. Le capteur de pression 10 est électriquement connecté à l'antenne tournante 13 tournante par un câble de connexion 14. En regard de l'antenne tournante 13 s'étend une antenne fixe 15 portée par un deuxième support fixe 16 rapporté sur l'essieu 4. L'antenne fixe 15 est reliée à un connecteur 17 fixe porté par le deuxième support fixe 16.

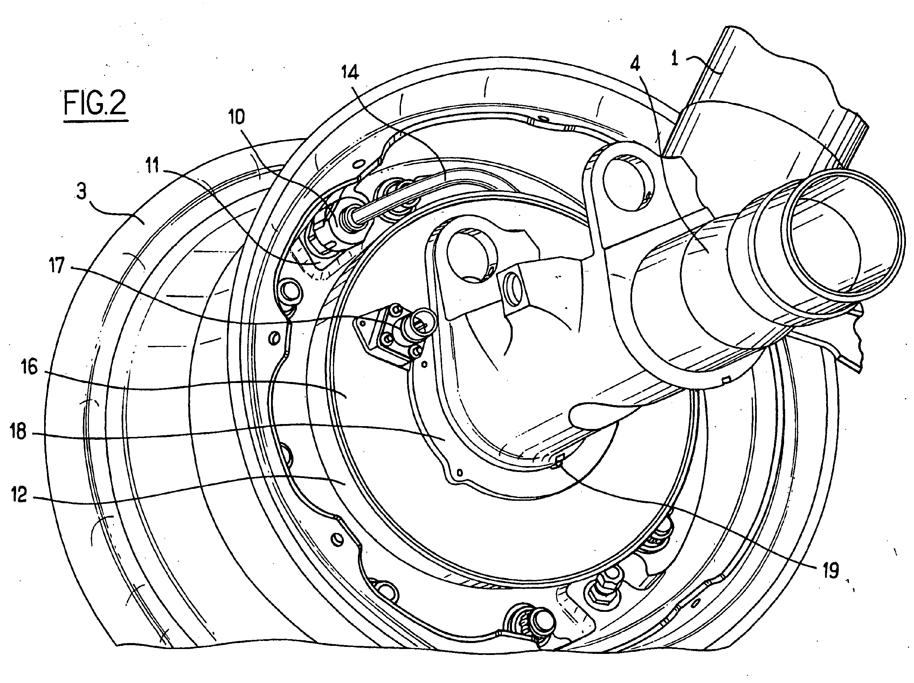

Le support fixe 16 est vissé sur une bague 18 formant par ailleurs une butée axiale pour l'un des roulements de la roue. Comme cela est plus particulièrement visible à la figure 2 la bague 18 est arrêtée en rotation grâce à un doigt 19 entrant dans une encoche de l'essieu 4.

Les deux antennes sont ici circulaires et sont centrées sur l'axe de la roue. Elles s'étendent en regard l'une de l'autre pour être en relation électromagnétique, en étant bien sûr extérieures à l'essieu.

Selon l'invention, l'antenne tournante 13 est ici portée par la roue 2 du côté intérieur de celle-ci. L'antenne fixe 15, en regard de l'antenne tournante 13, s'étend donc également du côté intérieur à la roue 2, entre celle-ci et la jambe de l'atterrisseur. De plus, le capteur de pression 10 est également implanté du côté intérieur à la roue 2. Le tout est intégralement logé à l'intérieur de la jante 3. Seul dépasse de la jante 3 l'extrémité du connecteur 17, comme cela est particulièrement visible sur la jante de gauche, non coupée.

Le connecteur 17 ainsi disposé est particulièrement proche de l'atterrisseur 1, ce qui permet d'y relier un câble descendant le long de l'atterrisseur et relié à des moyens de traitement (non représentés) de l'information délivrée par le capteur de pression 10. Ce câble, qui est figuré en pointillés, ne passe donc pas par l'intérieur de l'essieu 4. Cette disposition facilite considérablement la connexion de ce câble, permet l'utilisation d'un câble plus court, et évite en outre de devoir creuser l'essieu entièrement pour qu'il débouche dans l'intérieur de la partie basse de la tige de l'atterrisseur 1. Grâce à la liaison électromagnétique entre l'antenne tournante 13 et l'antenne fixe 15, les moyens de traitement reçoivent l'information de pression mesurée par le capteur de pression 10.

Les roues portées par l'atterrisseur auxiliaire ne comportant pas de freins, la jante est totalement dégagée du côté intérieur et il est ainsi possible d'y loger le dispositif de communication selon l'invention.

On constate sur les figures qu'une telle disposition libère complètement l'extrémité des essieux, qui peuvent alors recevoir un organe de remorquage de l'aéronef.

L'invention n'est pas limitée à ce qui vient d'être décrit, mais bien au contraire englobe toute variante entrant dans le cadre défini par les revendications.

## Revendications

1. Atterrisseur d'aéronef comportant au moins un essieu (4) sur lequel au moins une roue (2) est montée pour tourner, l'atterrisseur comportant un dispositif de communication (12,13) pour relier un capteur (10) monté sur une jante (3) de la roue à des moyens de traitement fixes montés sur l'aéronef, le dispositif de communication comportant une antenne tournante(13) montée sur la jante de la roue pour tourner avec celle-ci et reliée au capteur, et une antenne fixe (15) qui est montée en regard de l'antenne tournante pour être en relation électromagnétique avec celle-ci et qui est reliée aux moyens de traitement, **caractérisé en ce que** l'antenne fixe et l'antenne tournante s'étendent du côté intérieur à la roue en regard de l'atterrisseur.

2. Atterrisseur selon la revendication 1, dans lequel le dispositif de communication est logé sensiblement entièrement à l'intérieur de la jante de la roue.

3. Atterrisseur selon la revendication 1, dans lequel l'antenne tournante (13) et l'antenne fixe (15) sont des antennes circulaires centrées sur un axe de rotation de la roue et s'étendent en regard l'une de l'autre.

## Claims

1. An aircraft undercarriage including at least one axle (4) having at least one wheel (2) mounted to rotate thereon, the undercarriage including a communication device (12) for connecting a sensor (10) mounted on a rim of the wheel to stationary processing means mounted on the aircraft, the communication device comprising a rotary antenna (13) mounted on the wheel rim to rotate therewith and connected to the sensor, and a stationary antenna (15) facing said rotary antenna so that the antennas are in electromagnetic relation, said stationary antenna being connected to the processing means, wherein the stationary antenna and the rotary antenna extend on the inner side of the wheel facing the undercarriage.

2. An undercarriage according to claim 1, in which the communication device is housed substantially entirely inside the rim of the wheel.

3. An undercarriage according to claim 1, in which the rotary antenna (13) and the stationary antenna (15) are circular antennas centered on an axis of rotation of the wheel and extending facing each other.

## Patentansprüche

1. Flugzeug-Fahrwerk, umfassend mindestens eine Radachse (4), an der mindestens ein Rad (2) drehbar gelagert ist, wobei das Fahrwerk eine Kommunikationsvorrichtung (12, 13) umfasst, die dazu bestimmt ist, einen an einer Felge (3) des Rades montierten Sensor (10) mit ortsfesten, an dem Flugzeug montierten Verarbeitungsmitteln zu verbinden, wobei die Kommunikationsvorrichtung eine sich drehende Antenne (13) umfasst, die an der Felge des Rades montiert ist, um sich mit demselben zu drehen, und die mit dem Sensor verbunden ist, sowie eine ortsfeste Antenne (15), die gegenüber der sich drehenden Antenne montiert ist, um mit derselben in elektromagnetischer Verbindung zu stehen, und die mit den Verarbeitungsmitteln verbunden ist, **dadurch gekennzeichnet, dass** sich die ortsfeste Antenne und die sich drehende Antenne auf der Innenseite am Rad gegenüber dem Fahrwerk erstrecken.

2. Fahrwerk nach Anspruch 1, wobei die Kommunikationsvorrichtung im Wesentlichen vollständig im Inneren der Felge des Rades untergebracht ist.

3. Fahrwerk nach Anspruch 1, wobei die sich drehende Antenne (13) und die ortsfeste Antenne (15) kreisförmige Antennen sind, die auf eine Drehachse des Rades zentriert sind und sich einander gegenüberliegend erstrecken.
